# EUROPEAN PATENT APPLICATION

(11) **EP 4 760 539 A1**
(43) Date of publication of application: **17.06.2026**
(21) Application number: 24218569.2
(22) Date of filing: 10.12.2024
(51) Int. Cl.: G06F 16/74

(54) **RETRIEVING IMAGES FOR VIDEO SCRUBBING AT A CLIENT DEVICE**

(71) Applicant: Axis AB, 223 69 Lund (SE)
(72) Inventor: Henningsson, Toivo, 223 69 Lund (SE); Yuan, Song, 223 69 Lund (SE); Keskikangas, Axel, 223 69 Lund (SE); Asteberg, Samuel, 223 69 Lund (SE); Andersson, Markus, 223 69 Lund (SE)
(74) Representative: AWA Sweden AB

(57) **Abstract**

This disclosure relates to methods 400, software, devices and systems for video scrubbing that enables a client device to retrieve images for scrubbing based on a user-requested time along a video timeline of a video stored in a server. The client device checks S404 if a cached image meets specified conditions, including a timestamp within a precision margin around the requested time. The precision margin scales with the timeline length, providing a smaller margin for shorter timelines and a larger margin for longer timelines. If a relevant cached image is found, it is retrieved S416; if not, an image with a highest relevance score within the precision margin is fetched S418 from the server and stored in memory.

## Description

### Technical Field

The present disclosure relates to video scrubbing, and in particular to a method, device and software for retrieving images for video scrubbing at a client device.

### Background

Scrubbing is a technique that enables a user (e.g., via using a client device) to navigate through data, such as video data. This technique allows users to explore and interact with specific points or segments within a dataset by manipulating a control element, like a slider, along a designated timeline or axis.

Existing techniques for supporting smoother video scrubbing, such as caching, aim to reduce the need to retrieve images from the server that stores the video. While these caching techniques attempt to provide a seamless experience, they often fall short of allowing a smooth, uninterrupted navigation, as users may still encounter delays when manually navigating through the footage due to repeated image retrieval. These limitations can lead to latency and a less responsive scrubbing experience. Moreover, current techniques may not reliably allow users to quickly locate and navigate to specific sections of interest within the video.

There is thus a need for improvements in this context.

### Summary

In view of the above, solving or at least reducing one or several of the drawbacks discussed above would be beneficial, as set forth in the attached independent patent claims.

According to a first aspect of the present disclosure, there is provided a method of retrieving images for video scrubbing at a client device, the method comprising: detecting, by the client device, user input indicating a requested time along a timeline of a video, the video stored at a server device, wherein each image of the video is associated with a respective relevance score; checking, by the client device, if a cached image fulfilling each condition of one or more conditions is stored in a memory of the client device, wherein a first condition of the one or more conditions comprises the cached image having a timestamp within a precision margin of the requested time; upon determining that the cached image fulfilling each condition of the one or more conditions is present in the memory, retrieving the cached image from the memory; upon determining that the cached image fulfilling each condition of the one or more conditions is not present in the memory, retrieving, by the client device, an image from the video from the server device and storing the retrieved image in the memory; wherein the precision margin is proportional to a length of the timeline, such that a smaller margin is used for a short timeline and a bigger margin is used for a long timeline; and wherein retrieving an image from the server device comprises retrieving an image having a highest relevance score among the images having a time stamp within the precision margin.

As used herein, the "precision margin" defines a range around the user-requested time on the video timeline. It allows some flexibility in selecting images for scrubbing that may not precisely match the requested timestamp but are close enough to fulfil the user's intent. The precision margin adjusts according to the length of the timeline: for shorter videos (i.e., shorter portion of the video currently available for scrubbing), a smaller precision margin is used, offering more precise timestamp matching, while longer videos (i.e., longer portion of the video currently available for scrubbing), a larger precision margin is used, widening the range of acceptable timestamps. This scaling ensures a balance between accuracy and efficiency by adapting to the video length, providing relevant frames without needing to retrieve exact matches from the cache, which can improve performance and responsiveness during scrubbing.

The timeline represents the portion of the video currently available for scrubbing. While the entire video may be much longer, such as 90 minutes, the timeline can be zoomed in to display only a specific segment, for example between minutes 10 and 14. This focused view enables the user to navigate within a manageable section of the video, providing finer control and more detailed scrubbing within the chosen range. The precision margin then adapts to the length of this zoomed-in portion, ensuring that retrieved images closely match the user's intent within the selected timeframe.

The techniques described in this disclosure optimizes the video scrubbing experience by efficiently utilizing the client device's local cache and selectively retrieving images from the server based on both temporal proximity and relevance. By applying an adaptive precision margin, scaled to the timeline length, the method adjusts the allowable timestamp range, using a narrower margin for shorter timelines and a wider margin for longer ones. This approach minimizes unnecessary server retrievals by prioritizing a cached image when it satisfies all conditions. When server retrieval is needed, the method selects the image with the highest relevance score within the precision margin, facilitating that the most representative image within the precision margin is displayed during scrubbing. This combination of adaptive precision and relevance-based selection enhances responsiveness and improves user experience.

In some examples, a second condition of the one or more conditions comprises the cached image having a highest relevance score among the images in the video having a time stamp within the precision margin.

In this example, if the cached image is not the most relevant within the adaptive precision margin of the video, a more relevant image is retrieved from the server. This prioritization of relevance within a time-bound range may improve the scrubbing experience by presenting an image that best represents the video in the time segment corresponding to the precision margin, reducing visual noise by not presenting less relevant images.

In some examples, the method further comprises, upon determining that the memory comprises a currently cached image having a timestamp within the precision margin but not having the highest relevance score among the images having a time stamp within the precision margin, and upon determining that memory utilization will exceed a predefined threshold when storing the retrieved image in memory, deleting the currently cached image from the memory.

This approach facilitates that if the cache is nearing its capacity (based on the predefined threshold, which may be 100% or less, such as 80%), less relevant images within the current precision margin are removed to make room for the new, more relevant image. Conversely, if the memory threshold is not reached, the previous cached image(s) may be retained, allowing them to potentially be reused for adjacent precision margins for which they may be the most relevant image. This strategy may optimize cache usage by prioritizing the most relevant images while maintaining flexibility for timeline navigation.

In some examples, the client device has access to metadata specifying the relevance score of each image having a time stamp within the precision margin, wherein checking, by the client device, if a cached image fulfilling each condition of one or more conditions is stored in a memory of the client device comprises the client device using the metadata when checking if the cached image fulfils the second condition. In some examples, the client device has access to metadata specifying the relevance score of each image of the video.

The client device may have gained access to the metadata in any suitable way. For example, the metadata can be provided as a separate metadata stream. This approach is common in systems like ONVIF, a protocol for networked devices, which allows metadata to be streamed alongside the main data stream (i.e., the video) without embedding it directly into the video stream. The metadata can further be provided to the client device through a custom-built API that enables on-demand retrieval of relevance scores for specific video frames. This API could be tailored to dynamically deliver metadata as the user scrubs through the timeline (i.e., corresponding to the precision margin), reducing data transmission to only what is needed in real-time and optimizing network usage. Alternatively, the metadata for the entire video could be pre-buffered when the scrubbing session is initialized, enabling rapid relevance-based decisions without additional network requests during the scrubbing operation.

In some examples, the server device has access to metadata specifying the relevance score of each image having a time stamp within the precision margin, the method further comprising: querying, by the client device, the server device of the highest relevance score of an image having a time stamp within the precision margin; wherein checking, by the client device, if a cached image fulfilling each condition of one or more conditions is stored in a memory of the client device comprises the client device using the response of the query when checking if the cached image fulfils the second condition.

Advantageously, this example may reduce the processing load on the client device, as the server handles relevance score evaluation and provides only the data (e.g., the highest score, the time stamp or index of the image with the highest score, etc.,) needed to make caching decisions. This offloading allows the client device to work more efficiently, especially in resource-constrained environments. Moreover, this example may minimize unnecessary data transmission by sending only essential metadata rather than a complete set of relevance scores, thus optimizing network usage.

In some examples, the metadata specifying the relevance score of an image in the video comprises one or more of: a number of objects detected in the image; a number of object classes detected in the image; or a score indicating relevance of the image.

By considering the number of objects, frames with more visual detail may be prioritized, making them more informative for the user during scrubbing. Additionally, or alternatively, using the diversity of object classes allows the system to select images that represent a broader range of content. Additionally, or alternatively, a specific relevance score offers flexibility, allowing a custom relevance metric that can account for scene importance, event significance, or other context-specific factors.

In some examples, upon determining that a plurality of cached images are stored in the memory and fulfil each of the one or more conditions, retrieving the cached image from the plurality of cached images having an earliest time stamp among the plurality of cached images.

Advantageously, this example facilitates that the earliest relevant frame is prioritized when a plurality of relevant images exist in the cache, which can provide a more sequential or logical flow when the user scrubs through the video.

In some examples, retrieving an image from the server device further comprises, upon determining that a plurality of images having a time stamp within the precision margin each have the same highest relevance score, retrieving the image from the plurality of images having an earliest time stamp among the plurality of images.

Advantageously, this example facilitates that the earliest relevant frame is prioritized when a plurality of relevant images exists in the video, which can provide a more sequential or logical flow when the user scrubs through the video.

In some examples, the size of the precision margin is adjusted in response to a change in a zoom level of the timeline that changes the length of the timeline.

Adjusting the size of the precision margin in response to changes in the zoom level of the timeline allows maintaining accuracy and relevance in image selection. When the timeline is zoomed in, a smaller precision margin provides finer control, facilitating that retrieved images closely match the user's specified time. Conversely, when the timeline is zoomed out, a larger precision margin helps capture broader, representative frames without overwhelming the cache with near-duplicate images.

In some examples, upon determining that the cached image fulfilling each condition of the one or more conditions is present in the memory, displaying the cached image via a user interface of the client device; and upon determining that the cached image fulfilling each condition of the one or more conditions is not present in the memory, displaying the retrieved image via a user interface of the client device.

In this approach, the client device displays the cached image if it meets all conditions or retrieves and displays (and stores) an image from the server if not. This setup facilitates that the user experiences minimal delay, as cached images are displayed instantly when available, enhancing responsiveness and providing a smoother scrubbing experience.

In some examples, the user input indicating the requested time along the timeline of the video is a selection of a visual marker positioned along the length of the timeline corresponding to the requested time along the timeline of the video.

Using a visual marker for user input to indicate the requested time on the timeline may allow for precise and intuitive navigation, enabling users to quickly and accurately select specific points in the video.

According to a second aspect of the disclosure, the above object is achieved by a non-transitory computer-readable storage medium having stored thereon instructions for implementing the method according to the first aspect when executed on one or more devices having processing capabilities.

According to a third aspect of the disclosure, the above object is achieved by a client device providing video scrubbing functionality, the client device configured for retrieving images for the video scrubbing by: detecting user input indicating a requested time along a timeline of a video, the video stored at a server device, wherein each image of the video is associated with a respective relevance score; checking if a cached image fulfilling each condition of one or more conditions is stored in a memory of the client device, wherein a first condition of the one or more conditions comprises the cached image having a timestamp within a precision margin of the requested time; upon determining that the cached image fulfilling each condition of the one or more conditions is present in the memory, retrieving the cached image from the memory; upon determining that the cached image fulfilling each condition of the one or more conditions is not present in the memory, retrieving an image from the video from the server device and storing the retrieved image in the memory; wherein the precision margin is proportional to a length of the timeline, such that a smaller margin is used for a short timeline and a bigger margin is used for a long timeline; and wherein retrieving an image from the server device comprises retrieving an image having a highest relevance score among the images having a time stamp within the precision margin.

According to a fourth aspect of the disclosure, the above object is achieved by a system comprising the client device of the third aspect and a server, wherein the server is configured to: receive, from the client device, a query of the image having the highest relevance score among the images having a time stamp within the precision margin; and transmit the image to the client device.

The second, third and fourth aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
Figure 1 shows a system for video scrubbing of a video according to embodiments;
Figure 2 shows a cache for images used for video scrubbing according to embodiments;
Figure 3 shows a cache for images used for video scrubbing according to embodiments;
Figure 4 shows a flow chart of a method of retrieving images for video scrubbing at a client device.

### Detailed Description

In today's digital landscape, video scrubbing, navigating quickly through video content by moving along a timeline, is an advantageous feature for users seeking efficient access to specific scenes or moments within a video. With the vast amount of video content available across platforms, the ability to rapidly locate relevant portions is increasingly important, whether for professional analysis, personal enjoyment, or content creation. Effective scrubbing requires a smooth and responsive experience, where users can view representative images of the video as they scroll without long delays or irrelevant frames. However, achieving this responsiveness, especially in client-server setups where videos are stored remotely, can be challenging. By optimizing caching strategies and intelligently retrieving the most relevant images from the server, the techniques described herein address these challenges, providing users with a seamless and efficient scrubbing experience that balances speed, accuracy, and contextual relevance.

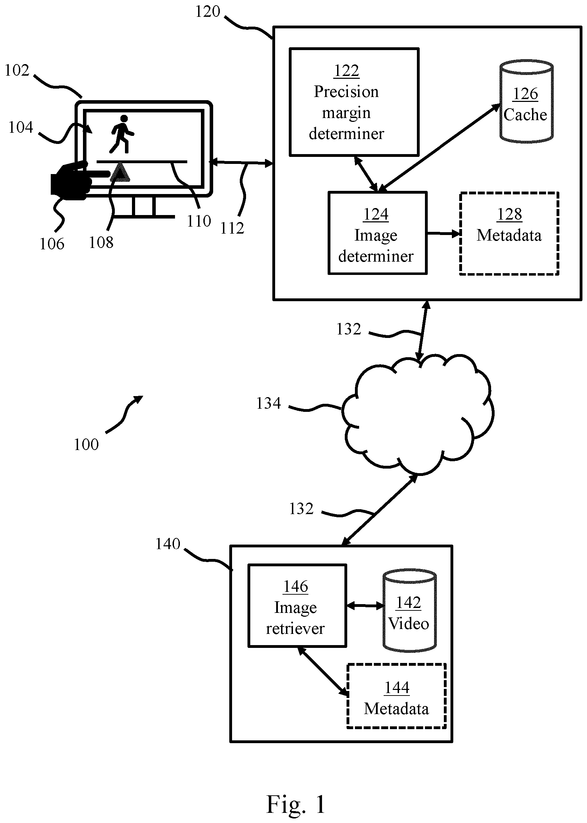

Figure 1 shows a system 100 for video scrubbing of a video 142 stored on a server device 140, according to various embodiments. The exemplary system 100 includes a display 102 presenting content (via a user interface 104) from the video 142. The video 142 may be streamed to the display 102 using protocols such as MPEG-DASH, HLS, or similar adaptive streaming protocols that enable smooth delivery and playback by adjusting to network conditions.

The display 102 includes a timeline 110 representing the video 142. The timeline 110 enables video scrubbing through user input 106, which specifies a desired time point along the timeline. For example, the user can select a specific time by positioning a visual marker (e.g., slider) 108 along the length of the timeline 110. The location of the visual marker 108 corresponds to the requested time within the video 142, allowing the user to quickly navigate to and view frames associated with that specific point. Any other suitable way of selecting the specific time may be employed.

The user can change the zoom level of the timeline 110 to facilitate navigation within a certain section of the video 142. Zooming in on the timeline 110 allows for more precise control, enabling the user to scrub through shorter time intervals and locate specific moments with greater accuracy. This is particularly beneficial when searching for fine details within a densely packed or eventful part of the video. Conversely, zooming out provides a broader view of the video 142, making it easier to navigate between larger segments or quickly locate key scenes across the entire video 142. This flexibility in zoom level enhances the overall user experience by adapting to different navigation needs within the video. As used herein, the "length of the timeline" corresponds to the portion of the video currently available for scrubbing. This length can vary depending on the zoom level of the timeline: a shorter length represents a zoomed-in view focused on a specific segment of the video (for example a length corresponding to 5 minutes, 1 minute, etc., of the video 142), while a longer length corresponds to a zoomed-out view (for example a length corresponding to 20 minutes, 30 minutes, the full length, etc., of the video 142), covering a broader span of the video.

The system 100 also includes a client device 120 responsible for retrieving images based on the user input 106 for video scrubbing. The client device 120 may be, for example, a computer directly connected to the display 102, or it may be connected to the display via a local network, such as Wi-Fi or Ethernet. The client device 120 detects the user input 106, which specifies a requested time along the timeline 110, through a connection 112 to the display 102.

The client device 120 includes a precision margin determiner 122, which is configured to establish a precision margin proportional to the length of the timeline 110. Specifically, a smaller margin is used for a shorter timeline, allowing for finer control, while a larger margin is applied when the timeline length is extended, offering a broader range around the requested time. The length of the timeline 110, therefore, directly impacts the precision margin that is later applied when selecting relevant images for scrubbing. For example, if the requested time indicated by user input 106 is 43:20 and the timeline length is set to display a segment of an hour, the precision margin might be set to e.g., 5 seconds. If the margin is set to 5 seconds, this would allow the system 100 to retrieve images for video scrubbing within a 10-second range around 43:20, i.e., from 43:15 (5 seconds earlier than the requested time) to 43:25 (5 seconds later than the requested time). In another example, if the requested time indicated by user input 106 is 10:24:30 and the timeline length is set to display a 24-hour segment, the precision margin might be set to 120 seconds, allowing the system 100 to retrieve images for video scrubbing within a 4-minutes range around the requested time (10:22:30 to 10:26:30). These above examples illustrate possible settings, and the specific precision margin may be adjusted based on system requirements, user preferences, or the desired balance between retrieval accuracy and performance.

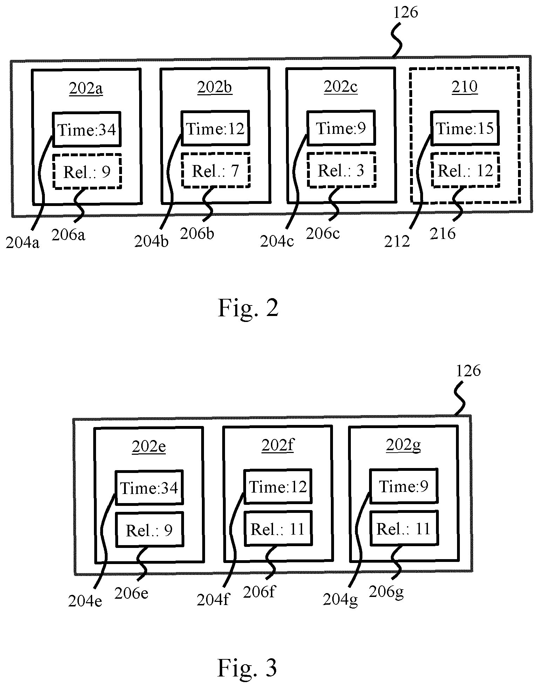

The client device 120 includes an image determiner 124, which is configured to check whether a cached image that meets each of one or more specified conditions is stored in the memory (cache) 126 of the client device 120 and can thus be used for scrubbing. A first condition requires that the cached image has a timestamp within the precision margin of the requested time. In some examples, a second condition of the one or more conditions comprises the cached image having a highest relevance score among the images in the video having a time stamp within the precision margin. These conditions will be further described in conjunction with Figures 2-3 below.

When the image determiner 124 identifies a cached image in the memory 126 that meets each of the specified conditions, this cached image is retrieved from memory and sent to the display 102 (via the connection 112) to be displayed via a user interface 104 as the scrubbing image. This process leverages cached images to provide a quick response, enhancing the scrubbing experience by minimizing delays.

Upon the image determiner 124 determining that a cached image fulfilling each condition of the one or more conditions is not present in the memory 126, the image determiner 124 is instead configured to retrieve an image from the video 142 from the server device 140 and store the retrieved image in the memory 126. The client device 120 is typically connected to the server 140 over the internet 134 via a network connection 132, which may be implemented using HTTP/HTTPS protocols for data transfer. The server device 140 may, e.g., be a network camera.

The system 100 is configured such that the retrieving of an image from the server device 140 comprises retrieving an image having a highest relevance score among the images having a time stamp within the precision margin.

The server device 140 includes an image retriever 146, which is configured to receive, via the network connection 132, a query from the client device 120 requesting the image with the highest relevance score among those with timestamps within the specified precision margin. Upon receiving this request, the image retriever 146 locates the relevant image from the video 142 stored on the server device 140 and transmits it back to the client device 120 (e.g., to the image determiner 124) over the network connection 132. When receiving the image from the server device 140, the image determiner 124 is configured to store the retrieved image in the memory 126. The retrieved image can then be sent to the display 102 (via the connection 112) to be displayed via the user interface 104 as the scrubbing image, delivering a contextually relevant visual response for the user based on the user input 106.

The data required for determining a relevance score of the images may reside in the client device 120 and/or the server device 140. In one example, the client device 120 has access to metadata 128 specifying the relevance score of each image having a time stamp within the precision margin (or metadata specifying the relevance score of each image of the video 144). In the case where the one or more conditions include that the cached image has a highest relevance score among the images in the video having a time stamp within the precision margin, such metadata 128 can be used to check this. By comparing the relevance scores in the metadata 128, the client device 120 can determine if a locally cached image meets the specified conditions without needing to request additional information from the server device 140. This setup streamlines the checking process, enabling quick access to relevant images based on pre-stored score 128.

In some examples, the server device 140 holds metadata 144 that specifies the relevance score for each image within the precision margin (or the scores of the entire video). When the conditions require that the cached image must have the highest relevance score among images in this range (the second condition), the client device 120 can verify this by querying the server 140. Specifically, the client device 120 sends a request to the server device 140 to obtain either the highest relevance score, the index of the image with that score, or another identifier representing the most relevant image within the precision margin.

The server may thus respond with the relevance score, the index, or any other identifier uniquely associated with the image holding the highest relevance score. The client device 120 can then use this information to check if the cached image fulfils the second condition.

The various embodiments for storing metadata 128, 144 that indicate relevance scores can influence how the client device 120 retrieves, from the server device 140, the image with the highest relevance score within the precision margin. For instance, if the metadata 128 is stored locally on the client device 120, the client device 120 can use this data 128 to identify the image with the highest relevance score within the precision margin and include only the identifier of that image (such as its index or timestamp) in the query sent to the server device 140.

Alternatively, if the metadata 144 is stored on the server device 140, the query from the client device 120 may simply specify the relevant precision margin without any specific identifier. The server device 140 may then use the metadata 144 to identify the image with the highest relevance score within the specified margin and transmit that image directly back to the client device 120. This approach leverages the server's data resources and offloads the relevance calculation from the client, streamlining the client-side process.

In some embodiments, the metadata 128, 144 specifying the relevance score for each image within the precision margin includes various metrics that assess the relevance of each image, with unique identifiers such as an index or timestamp to associate each image with its corresponding data. This metadata 128, 144 can incorporate several types of metrics that contribute to the relevance score.

One example metric is the number of objects detected within each image, where a higher object count may indicate greater visual complexity or importance, suggesting that the image is more informative. Another example metric is the number of object classes detected, which identifies the variety of categories present in the image (such as persons, vehicles, animals). Images with a wider range of object classes may be prioritized, as they capture more diverse content and provide a richer snapshot of the video segment. In addition to these metrics, a general relevance score may be assigned to each image, for example determined by custom algorithms tailored to specific application needs. This score may combine one or more factors, such as the above-mentioned metrics, motion intensity, to emphasize frames with significant movement, or event detection, where images featuring detected events or actions are marked as highly relevant.

Together, these metadata 128, 144 elements allow the system 100 to evaluate and compare images within the precision margin, facilitating that meaningful and representative frames are selected during scrubbing.

The division of functionality for retrieving images for video scrubbing at a client device, as illustrated in Figure 1, is provided solely for descriptive purposes. The described components, such as the image determiner 124, the precision margin determiner 122 and the image receiver 146, are shown as separate entities to clearly convey the roles and processes involved in retrieving images for video scrubbing. However, it should be understood that the techniques discussed herein can be implemented in various ways, and the specific organization of components may vary depending on the system architecture and design preferences. For example, certain functionalities may be combined into a single module, distributed across multiple systems, or implemented using alternative methods that achieve the same objectives. The described structure of Figure 1 is therefore not intended to be limiting, and any configuration that can be used for retrieving images for video scrubbing at a client device 120 falls within the scope of this disclosure.

Figure 2 shows by way of example a cache 126 of the client device 120. The cache comprises three cached images 202a-c. Each cached image 202a-c is associated with a time stamp 204a-c. Optionally, each cached image 202a-c may further be associated with a relevance score 206a-c.

In some examples, the one or more conditions only comprises the first condition, namely that the cached image having a timestamp within a precision margin of the requested time. In these examples, if the requested time is defined by the user to 33 seconds, and the precision margin is set to 3 seconds, (resulting in that images for video scrubbing can be retrieved within a 6-second range around 33, i.e., 30-36) the first cached image 202a fulfils the condition and may be retrieved from the cache 126.

If the requested time is defined by the user to 10 seconds and the precision margin is set to for example 2 seconds, both the cached images 202b-c fulfil the condition. In this case, i.e., upon determining that a plurality of cached images 202b-c are stored in the memory 126 and fulfil each of the one or more conditions, the cached image 202c from the plurality of cached images 202b-c having an earliest time stamp 204c among the plurality of cached images 202b-c is retrieved and used for scrubbing.

If the requested time is defined by the user to 17 seconds and the precision margin is set to for example 3 seconds, none of the cached images 202a-c fulfils the first condition of being within the time span of 14-20 seconds of the video. In this case, a new image 210 fulfilling the first condition and in addition having the highest relevance score within the precision margin is retrieved from the server as previously discussed. This image 210 is stored in the cache 126 for potential later use. If the cache 126 is full or will be full when storing the new image 210 (i.e., memory utilization will exceed a predefined threshold, not shown in Figure 2), the newly retrieved image 210 may replace one of the previously cached images 202a-c. For example, it may replace 202b, which has a timestamp 204b closest to the precision margin; or image 202c, which has the lowest relevance score 206c among the cached images. This replacement strategy may facilitate that the cache 126 is optimized by retaining images that are either substantially different in time to the precision margin or have the highest relevance among the cached images, improving the likelihood that future scrubbing requests can be met efficiently.

In some examples, the one or more conditions further comprises the second condition, namely that the cached image has a highest relevance score among the images in the video having a time stamp within the precision margin. For example, if the requested time is defined by the user to 16 seconds and the precision margin is set to for example 4 seconds, the second cached image 202b fulfils the first condition, having a time stamp 204b within the allowed time span of 12-20 seconds. However, it may be determined that the cached image 202b does not meet the second condition. In this case, the new image 210 fulfilling both conditions is retrieved from the server as previously discussed. This image 210 is stored in the cache 126 for potential later use. If the cache 126 is full or will be full when storing the new image 210 (i.e., memory utilization will exceed a predefined threshold, not shown in Figure 2), the cached image 202b in the correct time span but not being the most relevant image in that time span may be deleted and replaced by the newly retrieved image 210. Alternatively, any other of the above deletion strategies may be used.

Figure 3 shows by way of example the cache 126 of the client device 120. The cache comprises three cached images 202e-g. Each cached image 202e-g is associated with a time stamp 204e-g. As discussed above, in some examples, the one or more conditions further comprises the second condition, namely that the cached image has a highest relevance score among the images in the video having a time stamp within the precision margin. In the example of Figure 3, each cached image 202e-g is thus associated with a relevance score 206e-g. For example, if the requested time is defined by the user to 11 seconds and the precision margin is set to for example 2 seconds, , both the images 202f-g fulfil the first condition. Moreover, it may be determined, using metadata at the client device 120 and/or the server device 140 as previously described, that the highest relevance score withing the allowed time span of 9-13 seconds is 11. Both the images 202f-g thus fulfil this second condition as well. In this case, the client device may be configured to retrieve the cached image 202g having the earliest time stamp 204g among the plurality of cached images 202f-g fulfilling both conditions.

The example described in conjunction with Figure 3 may also be used at the server side for retrieving the image with the highest relevance score within a precision margin. Put differently, the server device (e.g., the image retriever 146) may be configured to, upon determining that a plurality of images having a time stamp within the precision margin each have the same highest relevance score, retrieve the image from the plurality of images having an earliest time stamp among the plurality of images.

In some examples, if the user navigates to a new segment of the timeline (for example one that does not overlap with the currently viewed segment, or largely different, more than a threshold difference), the cache 126 (e.g., as shown in Figure 2 and 3) may be cleared to optimize memory usage and ensure relevance for the newly accessed timeline. This approach is useful when the cached images no longer correspond to the current precision margin set by the new segment, as these images are unlikely to be useful for scrubbing within the new timeline.

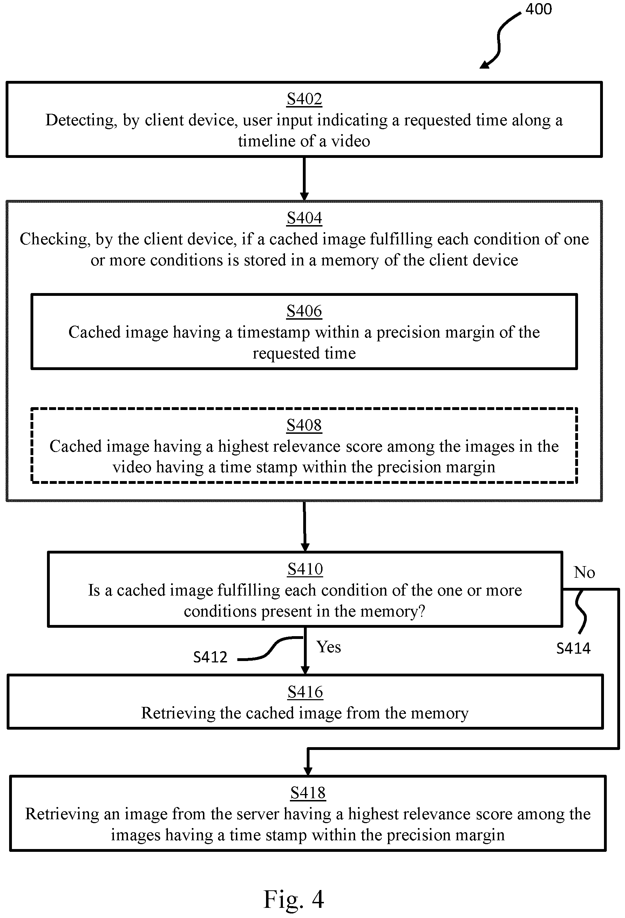

Figure 4 shows a flow chart of method 400 of retrieving images for video scrubbing at a client device.

The method 400 comprises detecting S402, by client device, user input indicating a requested time along a timeline of a video. The video is stored at a server device and each image of the video is associated with a respective relevance score.

The method 400 further comprises checking S404, by the client device, if a cached image fulfilling each condition of one or more conditions is stored in a memory of the client device. The checking S404 comprises checking S406 if the cached image fulfils a first condition. The first condition comprises that the cached image has a timestamp within a precision margin of the requested time. In some examples, the checking S404 comprises checking S408 if the cached image fulfils a second condition. The second condition comprises that the cached image has a highest relevance score among the images in the video having a time stamp within the precision margin.

The method 400 further comprises checking S410 whether a cached image fulfilling each condition of the one or more conditions is present in the memory. In case it is determined S412 that the cached image fulfilling each condition of the one or more conditions is present in the memory, the method 400 comprises retrieving S416 the cached image from the memory. In case it is determined S414 that the cached image fulfilling each condition of the one or more conditions is not present in the memory, the method 400 comprises retrieving S418 by the client device, an image from the video from the server device and storing the retrieved image in the memory.

In various examples, the methods (e.g., method 400) and functionalities described in this document can be implemented using a non-transitory computer-readable storage medium containing instructions that, when executed by one or more processing devices, perform these methods and functionalities. This storage medium may include, for example, flash memory, solid-state drives, hard drives, or other types of memory capable of retaining program instructions. Execution of these instructions can be carried out by various types of processors, including general-purpose processors (such as those found in standard desktop and laptop computers) as well as special-purpose microprocessors designed for specific tasks. These processors can operate as standalone processing units or as part of a multi-core or multi-processor system, which may enhance processing efficiency by distributing tasks across multiple cores. The processors can be supplemented by, or incorporated in, ASICs (application-specific integrated circuits).

The above embodiments are to be understood as illustrative examples of the disclosure. Further embodiments of the disclosure are envisaged. For example, additional example metrics may be used to determine the relevance score. These additional metrics may include colour diversity, which highlights frames with a broader colour palette, potentially indicating visually distinct scenes, or face detection count, which could prioritize images with recognizable human features in applications where human presence is significant. Further metrics may include "action recognition" and/or link to other meta-knowledge, e.g. a traffic light transitioning from red -> green or green -> red.

As another example, the relevance score may be supplemented by a measure of quality of crops of objects detected in the video. Thus, a third condition for selecting an image to retrieve and display, may be the presence of a better crop than is already available in the cache. If, for instance, an image frame having a relevance score of 10 and a time stamp within the precision margin is already available in the cache and the user scrubs back to the same point on the timeline, the third condition may be fulfilled by another image frame having a slightly lower relevance score but containing a new best crop that was not present in the already cached image frame.

As yet another example, the precision margin may be even more dynamic. If the user scrubs back and forth on a portion of the timeline, this may indicate that the user is particularly interested in this particular portion of the video. Therefore, the precision margin may be refined, such that the precision margin shrinks when the user shows such interest. This functionality may be expressed in different ways in the graphical user interface. One way would be to stretch the timeline and use heterogeneous distances between bars on the timeline. If every bar at first represents 5 minutes (i.e., 5 min|5 min|5 min|5 min|5 min|5 min), this may be changed such that in the centre of this time interval each bar only represents 30 seconds (e.g., 5 min|5 mini 1 min|1 min|30 s|1 mini 1 min|5 min|5 min). Another way would be to add a second "pop-out" timeline for the interesting interval. Using the same example numbers as for the heterogeneous timeline, the first timeline may have bars representing 5 minutes each and the pop-out timeline may have bars representing 1 minute each. A third pop-out timeline could then have bars representing 30 seconds each.

The proposed method can be further enhanced by incorporating the concept of dynamic resolution when retrieving images for video scrubbing from the server device. Dynamic resolution may adapt the quality of the retrieved images based on factors such as the level of relevance score or user interaction patterns. This could be achieved in several ways. For instance, scalable video coding techniques could be used to deliver images at varying resolutions depending on the user's current needs. For example, during rapid scrubbing, lower resolution images could be provided to prioritize speed, while higher resolution images might be delivered when the scrubbing slows or stops at a specific timestamp. Alternatively, the server device could store images in multiple resolutions on the server device, allowing the client to request an image at the resolution best suited to the current scenario.

The delivered resolution might depend on factors such as display size, available bandwidth, or relevance score. For example, the choice of resolution could be tied to the relevance score. In one example, if all images within the defined precision margin have low relevance scores, the server device may send an image with a lower resolution, as the content of the image is unlikely to provide significant value or detail to the user.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

## Claims

1. A method (400) of retrieving images for video scrubbing at a client device (120), the method comprising:
detecting (S402), by the client device, user input (106) indicating a requested time along a timeline (110) of a video (142), the video stored at a server device (140), wherein each image of the video is associated with a respective relevance score;
checking (S404), by the client device, if a cached image (202) fulfilling each condition of one or more conditions is stored in a memory (126) of the client device, wherein a first condition of the one or more conditions comprises the cached image having a timestamp (204) within a precision margin of the requested time;
upon determining (S412) that the cached image fulfilling each condition of the one or more conditions is present in the memory, retrieving (S416) the cached image from the memory;
upon determining (S414) that the cached image fulfilling each condition of the one or more conditions is not present in the memory, retrieving (S418), by the client device, an image from the video from the server device and storing the retrieved image in the memory;
wherein the precision margin is proportional to a length of the timeline, such that a smaller margin is used for a short timeline and a bigger margin is used for a long timeline; and
wherein retrieving an image from the server device comprises retrieving an image having a highest relevance score among the images having a time stamp within the precision margin.

2. The method of claim 1, wherein a second condition of the one or more conditions comprises the cached image having a highest relevance score (206) among the images in the video having a time stamp within the precision margin.

3. The method of claim 2, further comprising:
upon determining that the memory comprising a currently cached image having a timestamp within the precision margin but not having the highest relevance score among the images having a time stamp within the precision margin, and upon determining that memory utilization will exceed a predefined threshold when storing the retrieved image in memory, deleting the currently cached image from the memory.

4. The method of any one of claims 2-3, wherein the client device has access to metadata (128) specifying the relevance score of each image having a time stamp within the precision margin, wherein checking, by the client device, if a cached image fulfilling each condition of one or more conditions is stored in a memory of the client device comprises the client device using the metadata when checking if the cached image fulfils the second condition.

5. The method of claim 4, wherein the client device has access to metadata specifying the relevance score of each image of the video.

6. The method of claim 2-3, wherein the server device has access to metadata (144) specifying the relevance score of each image having a time stamp within the precision margin, the method further comprising:
querying, by the client device, the server device of the highest relevance score of an image having a time stamp within the precision margin;
wherein checking, by the client device, if a cached image fulfilling each condition of one or more conditions is stored in a memory of the client device comprises the client device using the response of the query when checking if the cached image fulfils the second condition.

7. The method of any one of claims 4-6, wherein the metadata specifying the relevance score of an image in the video comprises one or more of:
a number of objects detected in the image;
a number of object classes detected in the image, or
a score indicating relevance of the image.

8. The method of any one of claims 2-7, further comprising:
upon determining that a plurality of cached images are stored in the memory and fulfil each of the one or more conditions, retrieving the cached image from the plurality of cached images having an earliest time stamp among the plurality of cached images.

9. The method of any one of claims 1-8, wherein retrieving an image from the server device further comprises:
upon determining that a plurality of images having a time stamp within the precision margin each have the same highest relevance score, retrieving the image from the plurality of images having an earliest time stamp among the plurality of images.

10. The method of any one of claims 1-9, wherein the size of the precision margin is adjusted in response to a change in a zoom level of the timeline that changes the length of the timeline.

11. The method of any one of claims 1-10, further comprising:
upon determining that the cached image fulfilling each condition of the one or more conditions is present in the memory, displaying the cached image via a user interface (104) of the client device; and
upon determining that the cached image fulfilling each condition of the one or more conditions is not present in the memory, displaying the retrieved image via a user interface of the client device.

12. The method of any one of claims 1-11, wherein the user input indicating the requested time along the timeline of the video is a selection of a visual marker (108) positioned along the length of the timeline corresponding to the requested time along the timeline of the video.

13. A non-transitory computer-readable storage medium having stored thereon instructions for implementing the method according to any one of claims 1-11 when executed on one or more devices having processing capabilities.

14. A client device (120) providing video scrubbing functionality, the client device configured for retrieving images for the video scrubbing by:
detecting (S402) user input (106) indicating a requested time along a timeline (110) of a video (142), the video stored at a server device (140), wherein each image of the video is associated with a respective relevance score;
checking (S404) if a cached image (202) fulfilling each condition of one or more conditions is stored in a memory (126) of the client device, wherein a first condition of the one or more conditions comprises the cached image having a timestamp (204) within a precision margin of the requested time;
upon determining (S412) that the cached image fulfilling each condition of the one or more conditions is present in the memory, retrieving (S416) the cached image from the memory;
upon determining (S412) that the cached image fulfilling each condition of the one or more conditions is not present in the memory, retrieving (S418) an image from the video from the server device and storing the retrieved image in the memory;
wherein the precision margin is proportional to a length of the timeline, such that a smaller margin is used for a short timeline and a bigger margin is used for a long timeline; and
wherein retrieving an image from the server device comprises retrieving an image having a highest relevance score among the images having a time stamp within the precision margin.

15. A system comprising the client device of claim 14 and a server (140), wherein the server is configured for:
receiving, from the client device, a query of the image having the highest relevance score among the images having a time stamp within the precision margin; and
transmitting the image to the client device.

## Amended claims

### Amended claims in accordance with Rule 137(2) EPC.

1. A method (400) of retrieving images for video scrubbing at a client device (120), the method comprising:
detecting (S402), by the client device, user input (106) indicating a requested time along a timeline (110) of a video (142), the video stored at a server device (140), wherein each image of the video is associated with a respective relevance score;
checking (S404), by the client device, if a cached image (202) fulfilling each condition of one or more conditions is stored in a memory (126) of the client device, wherein a first condition of the one or more conditions comprises the cached image having a timestamp (204) within a precision margin of the requested time;
upon determining (S412) that the cached image fulfilling each condition of the one or more conditions is present in the memory, retrieving (S416) the cached image from the memory;
upon determining (S414) that the cached image fulfilling each condition of the one or more conditions is not present in the memory, retrieving (S418), by the client device, an image from the video from the server device and storing the retrieved image in the memory;
wherein the precision margin defines a range around the requested time along the video timeline, wherein the precision margin is proportional to a length of the timeline, such that a smaller margin is used for a short timeline and a bigger margin is used for a long timeline, wherein the length of the timeline defines a length of the video available for video scrubbing such that a shorter timeline defines a shorter length of the video available for video scrubbing and a longer timeline defines a longer length of the video available for video scrubbing; and
wherein retrieving an image from the server device comprises retrieving an image having a highest relevance score among the images having a time stamp within the precision margin.

2. The method of claim 1, wherein a second condition of the one or more conditions comprises the cached image having a highest relevance score (206) among the images in the video having a time stamp within the precision margin.

3. The method of claim 2, further comprising:
upon determining that the memory comprising a currently cached image having a timestamp within the precision margin but not having the highest relevance score among the images having a time stamp within the precision margin, and upon determining that memory utilization will exceed a predefined threshold when storing the retrieved image in memory, deleting the currently cached image from the memory.

4. The method of any one of claims 2-3, wherein the client device has access to metadata (128) specifying the relevance score of each image having a time stamp within the precision margin, wherein checking, by the client device, if a cached image fulfilling each condition of one or more conditions is stored in a memory of the client device comprises the client device using the metadata when checking if the cached image fulfils the second condition.

5. The method of claim 4, wherein the client device has access to metadata specifying the relevance score of each image of the video.

6. The method of claim 2-3, wherein the server device has access to metadata (144) specifying the relevance score of each image having a time stamp within the precision margin, the method further comprising:
querying, by the client device, the server device of the highest relevance score of an image having a time stamp within the precision margin;
wherein checking, by the client device, if a cached image fulfilling each condition of one or more conditions is stored in a memory of the client device comprises the client device using the response of the query when checking if the cached image fulfils the second condition.

7. The method of any one of claims 4-6, wherein the metadata specifying the relevance score of an image in the video comprises one or more of:
a number of objects detected in the image;
a number of object classes detected in the image, or
a score indicating relevance of the image.

8. The method of any one of claims 2-7, further comprising:
upon determining that a plurality of cached images are stored in the memory and fulfil each of the one or more conditions, retrieving the cached image from the plurality of cached images having an earliest time stamp among the plurality of cached images.

9. The method of any one of claims 1-8, wherein retrieving an image from the server device further comprises:
upon determining that a plurality of images having a time stamp within the precision margin each have the same highest relevance score, retrieving the image from the plurality of images having an earliest time stamp among the plurality of images.

10. The method of any one of claims 1-9, wherein the size of the precision margin is adjusted in response to a change in a zoom level of the timeline that changes the length of the timeline.

11. The method of any one of claims 1-10, further comprising:
upon determining that the cached image fulfilling each condition of the one or more conditions is present in the memory, displaying the cached image via a user interface (104) of the client device; and
upon determining that the cached image fulfilling each condition of the one or more conditions is not present in the memory, displaying the retrieved image via a user interface of the client device.

12. The method of any one of claims 1-11, wherein the user input indicating the requested time along the timeline of the video is a selection of a visual marker (108) positioned along the length of the timeline corresponding to the requested time along the timeline of the video.

13. A non-transitory computer-readable storage medium having stored thereon instructions for implementing the method according to any one of claims 1-11 when executed on one or more devices having processing capabilities.

14. A client device (120) providing video scrubbing functionality, the client device configured for retrieving images for the video scrubbing by:
detecting (S402) user input (106) indicating a requested time along a timeline (110) of a video (142), the video stored at a server device (140), wherein each image of the video is associated with a respective relevance score;
checking (S404) if a cached image (202) fulfilling each condition of one or more conditions is stored in a memory (126) of the client device, wherein a first condition of the one or more conditions comprises the cached image having a timestamp (204) within a precision margin of the requested time;
upon determining (S412) that the cached image fulfilling each condition of the one or more conditions is present in the memory, retrieving (S416) the cached image from the memory;
upon determining (S412) that the cached image fulfilling each condition of the one or more conditions is not present in the memory, retrieving (S418) an image from the video from the server device and storing the retrieved image in the memory;
wherein the precision margin defines a range around the requested time along the video timeline, wherein the precision margin is proportional to a length of the timeline, such that a smaller margin is used for a short timeline and a bigger margin is used for a long timeline, wherein the length of the timeline defines a length of the video available for video scrubbing such that a shorter timeline defines a shorter length of the video available for video scrubbing and a longer timeline defines a longer length of the video available for video scrubbing; and
wherein retrieving an image from the server device comprises retrieving an image having a highest relevance score among the images having a time stamp within the precision margin.

15. A system comprising the client device of claim 14 and a server (140), wherein the server is configured for:
receiving, from the client device, a query of the image having the highest relevance score among the images having a time stamp within the precision margin; and
transmitting the image to the client device.
